# EUROPEAN PATENT SPECIFICATION

(11) **EP 1 430 182 B1**
(45) Date of publication and mention of the grant of the patent: **05.08.2009**
(21) Application number: 02763124.1
(22) Date of filing: 27.09.2002
(51) Int. Cl.: E01F 9/018

(54) **CONNECTOR FOR CARRYING ROADSIDE POSTS**
VERBINDER ZUM TRAGEN VON PFOSTEN AM STRASSENRAND
CONNECTEUR POUR POTEAUX D'ACCOTEMENT PORTEURS

(30) Priority: 28.09.2001 NO 20014707
(43) Date of publication of application: 23.06.2004
(73) Proprietor: Euromast AS, 6893 Vik i Sogn (NO); Malo, Kjell Arne, 7030 Trondheim (NO); Ilstad, Haavard, 7032 Trondheim (NO)
(72) Inventor: MALO, Kjell, Arne, N-7030 Trondheim (NO); ILSTAD, Haavard, N-7032 Trondheim (NO)
(74) Representative: Khan, Mohammed Saiful Azam
(86) International application number: PCT/NO2002/000347
(87) International publication number: WO 2003/033819

(56) References cited:
- CA-A- 973 677
- SE-B- 445 656
- US-A- 3 912 404
- US-A- 5 855 443
- US-A- 6 056 471
- US-B1- 6 210 066

## Description

The invention relates to a connecting device as stated in the introductory part of claim 1, for support structures such as poles; posts and the like for use with roadways. Further the invention relates to such support structures which are integrated to such a connecting device.

Such connecting devices for poles/posts and the like can be used for traffic information and/or lighting purposes, for example for traffic signs, light signals, full-size or half-size portals, gate lighting, road railings and other components intended to break or be yieldable and-take shock energy according to given criteria.

### Background

Nowadays lighting poles, signs etc. are part of a comprehensive traffic environment.
Typically such constructions are mounted on concrete foundations or the like and have to be dimensioned for tolerating both its own weight and natural loads like snow and wind and other loads. This can result in very unfavourable characteristics in view of rigidity and load capacity upon a collision with a vehicleoccuring. The increasing importance of road safety in many countries means that one strives for the traffic environment to develop in such a way that it results in passive safety to the road users. In this connection a European norm has been drawn up for checking and authorising of yieldable road equipment: EN 12767 *Passive safety of support structures for road equipment.* This standard demands that traffic equipment has to be yieldable and mainly energy absorbing. Yieldable poles are classified according to their energy absorbing characteristics in the following classes:
HE: High energy absorbing
LE: Low energy absorbing
NE: Not energy absorbing

In the HE-class an automobile will be completely cushioned and retarded in a controlled manner of combined energy absorption by the automobile and the present traffic construction. In the LE-class the automobile will be retarded in a controlled manner down to a so-called let-go velocity where thereafter the contacted support structure will break and skid away. For both the HE- and LE-class it is demanded that no loose parts shall skid away, along with the demand that no parts shall penetrate the compartment of the automobile. In the NE-class the construction shall be cut off immediately at impact and shall skid away. This usually is called a break-away-system.

### Prior art

Norwegian patent specification 160458 describes a post with a casing and rods adjusted for structural interaction with each other and which are connected with each other so that the interaction is interrupted when the post is exposed to a local stress of a predetermined magnitude in the transverse direction. In this particular case the casing is designed as a polygonal body and produced by extruding. In the corners there are arranged inner grooves which form breaking points, and at least on some of the sides of the casing are arranged open channels divided by reeds projecting into them. The rods are attached to the channels, preferably under pretension of the clamping reeds. With this solution the rods and the casing interact for the receiving of static loads and have no substantial effect on a collision, and the rods have no axial pretension.

There are known a number of break-away systems intended to reduce the damage to a vehicle and its passengers in a rear-end collision. For example in US-patent specifications 3.637.244, 3.951.556, 3.967.906 and 6.056.471 there are disclosed systems which concentrate the deformations within various designs of bolts which are fixed onto a footing. Common to these is that they do not have separate rigidity and torque and shearing strength. Consequently that area which is adjusted to control one absorption also causes reduced rigidity and strength in view of other loads. No one of these is of interest to energy absorbing support structures.

The Canadian patent specification 973677 , on which the preamble of claim 1 is based, also discloses a break-away system. This system consists of a tube which at both ends is fastened with a bolt. The system breaks as a result of shearing strain between the ends of the tube.

From the US-patent specification 4.923.319 (Dent 1990) there is known a connection device with two mounting plates which are held together by end-to-end bolts with a "preformed stress point". This is formed from a piece of material which is turned to the form of an end-to-end bolt with tapered shoulders which concentrates all shearing strain within one weak point right in the middle between the mounting plates. This point is calculated to be broken in a collision.

From the US-patent specification 5.855.443 (Faller et al. 1999) there is known a corresponding connection device which also is provided with two mounting plates which are held together by end-to-end bolts. The only difference over 4.923.319 (Dent 1990) is that around each bolt between the mounting plates are mounted two loose shearing rings instead of the turned design known from Dent 1990. The loose shearing rings allow the bolts to have a greater effective cross-section in view of shear fracture of the bolts. Where the rings meet, the effective cross-section thus will only be the cross-section of the bolt, so that the deformation is being concentrated to this point. Upon a collision occuring the loose rings play their part to ensure collapse by the bolt being sheared. Both these two solutions are pure break-away solutions which are based on shearing of bolts with the aid of stress concentrating elements. For such a solution to function, it is required that the distance between the mounting plates is as short as possible at the most between one and two bolt-diameters. Greater distances between the mounting plates will lead to the bending deformation of the bolts being dominant and the shearing will not be acheived.

In connection with yielding carrying structures designed to be energy absorbing, such solutions are not acceptable because the distance between the mounting plates is too small to allow sufficient rotation and the establishing of a link without torque at the foot point of the connection device. Considerable rotation at the foot point, without torques should be possible. A considerable deficiency of both solutions is that the tension concentrating elements should not prevent this, to establish rotation at the foot point of the pole. It still is necessary to have a large distance between the mounting plates, as well as having the elements between the plates occupying considerable less space after collapse, than the distance between the plates. This requirement is not met by the devices of US patent specifications 4,023,319 and 5,855,443 and consequently, they are not possible connections devices for energy absorbing carrying structures. Both the torque capacity and the shear capacity of the last two break-away-links are connected through the dimensions of the minimum section of the bolts, which is considered a drawback. This should be seen against the background of a series of road accidents involving carrying structures connected with shear-links, where the impact has occured at a larger distance between the striking point than planned. Consequently the impact of the collision has been dominated by the torque effect and the shear links thus have not functioned satisfactorily. The shearing itself has also been connected with uncertainty.

In US patent specification 6,210.066 (Dent 2001) a break-away-joint is described, using only a break-away-connection. In principle, this is identical to a previous Dent structure (1990) (US 4,923,319) with a through bolt with a preformed stress point. To provide resistance against bending in the joint with only one break-away-connection, the 2001 patent in addition uses vertical legs or legs provided by the side walls of the end connection of the pole or suitable side walls which are rigidly connected with the upper end connection to the pole. A horizontal plate is then mounted between said sidewalls or legs. A lower horizontal plate finishes the lower end connection (from the base) and this is without legs. The distance between said two horizontal plates is dictated by the distance between the shoulders of the break-away-connection. It is clearly demonstrated that this is a break-away-solution restricted to small carrying structures with low torque impact from ordinary strains, such as wind. This is due to the fact, that at torque impact, the break-away-connection will have tension and one of the legs will have thrust, but as the inner torque arm with this solution maximum will be half the diameter of the pole (or the distance from the connection to the leg) the torque capacity will be low. The torque capacity can be increased by increasing the diameter of the break-away-connection, but this may obstruct the interception of the bolt and thus the release of the shear joint. A further major disadvantage of the prior art of US patent specification 6,210,066 is the low possibility of achieving the bending stiffness necessary at the foot of e.g. 14 metre high light poles, as this design has no aility to ensure power transfer through the legs, by e.g. being without the possibility of having any torque on the legs. Tightening the bolt of the break-away-connection will not alter this, as it is provided as a physical part. This design is also not available as a connecting device in energy absorbing structures as the legs are attached to and rigidly connected to the upper pole. This implies that there is no room for rotation at the base point at a collision because the legs inhibit this (this is also a reason for having the legs). Rotation without a link at the base point and gripping as to axial forces are features needed in energy absorbing structures, and the structure described in US patent specification 6,210,066 provides no possibility in this regard.

Common drawback for said known units is that the same structural element provides stiffness and strength for all deformation modus and that these known units do not provide a satisfactory and complete set of deformation modus.

In US patent specification 3,912,404 (Katt 1975) a pole structure is described, in which the pole is divided and connected with a not further described breakable connection device and an anchoring device. This anchoring device is to be fastened with at least one bolt through the wall of the pole and correspondingly at the end of the pole at the ground. It is a feature of this anchoring device that it is designed as a strip with a longitudinal slot with one or more bolts at each end, the bolts being fastened to the wall of the pole. The slots allow for a restricted deformation both transversally and longitudinally to the slot.

This design seems satisfactory for use on smaller carrying structures to avoid loose parts and without strong requirements to energy absorption, as specified in EN 12767 (with the classes HE and LE), without using mounting or base plates. This design is, however, unsuitable when using mounting plates, as the mounting bolts of this specification are provided to penetrate the walls of the poles. The design of the anchoring device of US 3,912,404 provides for a deforming both transversally to the strip, by allowing the slot to move along the direction of the mounting bolt and longitudinally to the strip by allowing the position of the bolt in the slot to change. For energy absorbing carrying structures (HE, LE) this may lead to malfunction of the anchoring device. If movement of the attachment point of the mounting strip on the bolt is allowed, the bolt may bend. The anchoring forces will be very high in energy absorbing structures (HE, LE) and the bolts to withstand such forces will be impracticably large. If no displacement of the strip along the bolt is allowed, and it is attached to the pole wall, two disadvantages may be mentioned. Firstly, the possibility of deformation transversally to the axis of the pole is lost and the "breakable" connection will not be released. Secondly, is the problems encountered with connecting systems provided for allowing movement along slots mounting two or more parts with bolts. Experience has shown that the displacement along the slots after a time will not function, both due to contamination and corrosion effects and due to the tightening of the bolts hereby making the friction too high.

From SE patent specification 445 656 there is known an arrangement with pole elements with a flexible band, the length of which is substantially longer than the length between its fastening points in the pole element and the base. The idea behind this solution is that when the pole is run down it is broken, in a way not stated, at the base, the band is then extended by the impacting car and the pole is thought then to slide along the band which is substantially longer than the distance between the fixing points, until the length of the band is consumed and the sliding of the pole is stopped. It is stated that this sliding provides a possibility for reducing the velocity of a vehicle over a relatively long distance. This is, however, as the reduction of the velocity of a vehicle also demands a reduction of the kinetic energy of the vehicle. To achieve this, the energy balance requires the reduced energy to be transferred to another object, in this case the pole, or is converted into inner energy (extension energy) e.g. by plastic deformation of the pole. In this case, it is provided that the pole slides over the vehicle and remains substantially undamaged and thus consumes no substantial energy. Experience and calculations have shown that on running down of a more than 10 metre high, heavy light pole of steel, with breaking joint, less than 10% of the kinetic energy of the vehicle at a velocity of 80-100 km/h is consumed. With smaller and lighter poles, such as traffic signs or traffic lights, the transfer of kinetic energy from the vehicle to the pole will be quite insignificant. A substantial reduction of the velocity of the vehicle over a long distance therefore is quite improbable. To the contrary this design this design has a negative side effect. By allowing the pole to slide along the band and to rotate to extend in the direction of movement of the vehicle, without accelerating the point of gravity of the pole in the direction of movement, a heavy jerk will be applied to the band at the end of the sliding movement. This will result in a strong change of velocity of the pole, which will involve acceleration of the vehicle and great risk of personal injury. Finally, it is to be mentioned that the design proposed in SE B445 656 will be without interest, at least in Europe, due to regulations EN12767, requiring pure break-away-systems or an energy absorbing systems (LE, HE) in which the carrying structure to most extent should be place under the running down vehicle.

### Object

The main object is to provide a connecting device between a base and a carrying structure, such as a mast or a pole or similar, as mentioned above, respectively a complete carrying structure, which is considerably improved in regard of yielding and the capacity for energy absorption and one or more of the disadvantages mentioned above.

Particularly it is an object to provide a connecting device with maximum and predictable strength and mutually independent rigidity, bending strength, shear strength and axial load capacity about one or more axes. By having a defined maximum bending strength and shear strength, and that the connecting device on e.g. running down providing a torque less joint and an attachment for axial forces at the foot point, it is possible to secure the important additional feature of providing energy absorption and collapse function.

A further object is that the connecting device should not reduce the rigidity of the carrying structure or limit the required load capacity of the carrying structure at normal loads, such as wind. It should be simple and low cost in installation and maintenance. It is also important that the performance is predictable, reliable and repeatable over a long period of time.

A particular object is to provide a carrying structure intended for use along roads, which in a controlled and predictable manner can absorb energy upon being run down.

### The Invention

The invention is stated in claim1, while claims 2-16 states particular advantageous features or modifications. Claim 17 defines a carrying structure based on the invention of claim 1.

Further details of the invention are stated in the following description of examples.

In this specification "carrying structure" is used as a common term for a carrying element rising or projecting from a base, the connecting device and the base. The rising or projecting element is in the following simply refered to as a "pole". Thus the term "pole" may cover any vertical, horizontal or inclined projecting element which may be arranged at a roadway as independent or integrated carrying means. The pole can have various embodiments, such as a pillar for a road sign, a light mast or a non-vertical element carrying a road fence or another road guard. By "connecting device" is meant the parts connecting the base and the pole, being separate parts or being totally or partly integrated in the elements to be connected. By "anchoring device" is meant the parts providing the anchoring between a foundation and the pole, being a wire, a cable or another bendable member. By "base" is meant any structures or foundation which the pole can be connected to.

The invention allows the separation of all important functions in regard of strength and rigidity for a yielding carrying structure. The invention is provided with separate structural elements to counter the different load effects from normal loads, as wind and gravity, as well as impact, e.g. upon the collision of a vehicle. By changing the dimensions of the various structural elements, minimum and maximum strength and rigidity may be substantially independently designed. By integrating the different parts with individually adapted dimensions is created an integrated, yielding connecting device with known combinations of qualities and predictable behaviour.

The invention may be installed both on new carrying structures, such as masts and poles, and on existing units with a separate base. It may also be used for marine traffic systems, e.g. for fenders on quays.

The composite yielding connecting device comprises two or more mounting plates which are connected by elements consisting of one or more pressure members, one or more tension members, one or more shear members and zero, one or more anchoring members for axial load, and various bolts, nuts, washers etc.

### Example

The invention is described in the following with reference to the drawings, wherein
Fig. 1 shows a vertical side view of a pole intended for a light mast,
Fig. 2A shows an enlarged and more detailed section of the connecting device of Fig. 1, and Fig. 2B shows a horizontal section through the connecting device of Fig. 2A,
Fig. 3 shows schematically and in section a connecting device, representative parts being shown in exploded view,
Fig. 4A and 4B shows a longitudinal and a transverse section through an embodiment of pressure members, tension members and shear members for use in a connecting device as shown in Fig. 2A and 2B,
Fig. 5 shows a sectioned side view of an alternative embodiment of pressure member, tension member and anchoring member,
Fig. 6A and 6B shows a longitudinal and a transverse section of the pressure member and the shear member used in Fig. 5,
Fig. 7 shows an alternative to the pressure member and the tension member shown in Fig. 6A and 6B,
Fig. 8A and 8B show a part of a top plan view and a section through the lower mounting plate wherein an alternative assembly of pressure member, tension member and shear member between the mounting plates is shown,
Fig, 9A and 9B show a side view and a sectioned top view of an alternative pressure member and shear member,
Fig. 10A and 10B show a side view of an alternative anchoring device between the mounting plates and a section through the anchoring device,
Fig. 11A and 11B show a side view of a alternative anchoring device between the mounting plates and a section through this anchoring device,
Fig. 12 shows in side view an impact situation for an anchored pole with fracture in bending mode,
Fig. 13 shows in side view an impact situation for a pole with fracture in shear mode, only the pole, the mounting plates, the shear members and the tension members being shown, and
Fig.14 shows a side view an impact situation of a anchored pole with fracture in the pole and in the connecting device.

Generally in the drawings are all elements belonging to a pressure member numbered with 1nn, where n is a digit, tension member numbered with 2nn, where n is a digit, shear member numbered with 3nn, where n is a digit, anchoring member numbered with 4nn, where n is a digit.

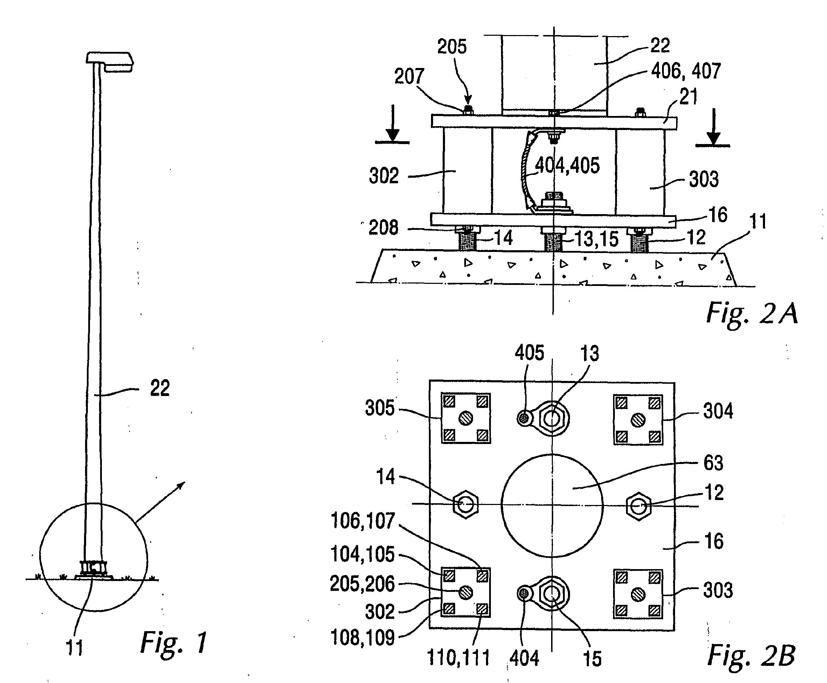

The invention is a connecting device which is mounted between a mast or a similar element and a base. An example for such a carrying structure is shown with a vertical side view of a light pole 22 mounted on a base 11 in Fig. 1. The connecting device is arranged at the foot point and shown in an enlarged side view in Fig. 2A and with a corresponding horizontal section through the connecting device in Fig. 2B. Both Figures are explained in more detail below.

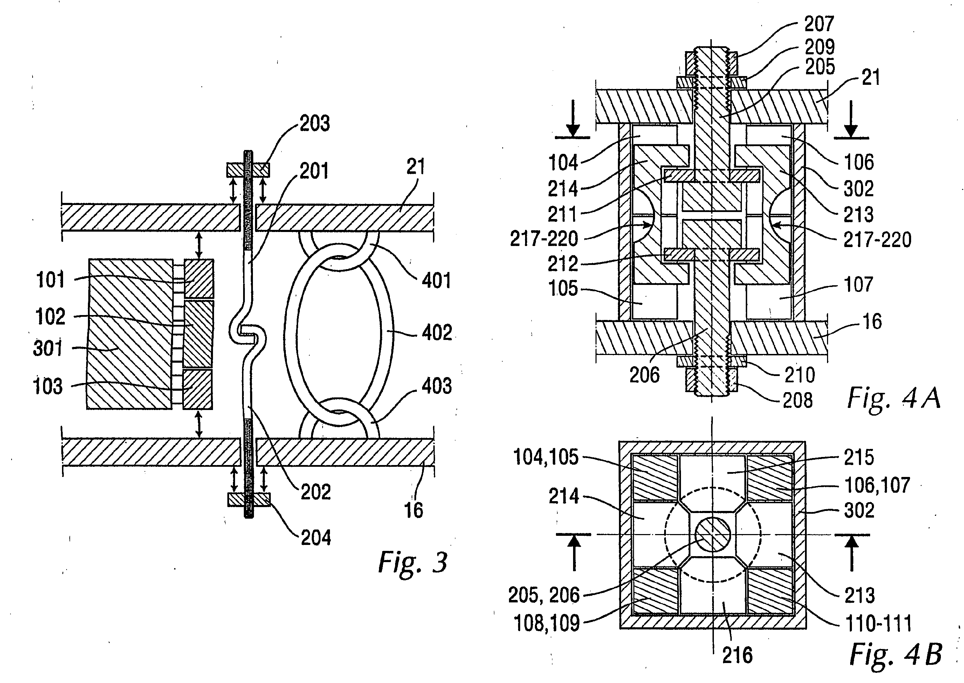

The carrying structure of the example comprises a concrete base 11 moulded in situ or embedded in place and having four protruding bolts 12-15 with threaded ends. The bolts 12-15 carry a lower mounting plate 16 with holes for the bolts. An upper mounting plate 21 is welded to an upright pole 22 in a central location. To keep the pole 22 anchored to the concrete base 11 upon an impactcausing fracture, two anchoring wires 404, 405 which provide an anchoring device are installed, by being anchored at the lower end to two of the bolts 12-15 and to the upper mounting plate 21 such anchoring being by way of two bolts 406-407. The mounting plates are support for e.g. four identical assemblies of pressure members 1nn and tension members 2nn, confined by the sleeve shear members 302-305. Such an assembly is shown in more detail on Fig. 4A and 4B, in a vertical section and horizontal section respectively.

The principle of this connecting device is shown in section in Fig. 3, wherein the representative elements are separated in an exploded view. The pressure member 101-103 transfers pressure forces between the plates 16 and 21 and maintaining the distance between the plates. The pressure member consists of one or more elements stacked and/or arranged side by side. The element/s 101-103 are not attached to the mounting plates 16 and 21, but are kept in place or sideward supported by the shear member 301. The pressure member is pretensioned between the mounting plates by the tension member 201-202. The axial rigidity of the connecting device at normal load (in the direction of the pretensioning force) is thus is controlled by the material rigidity and sectional area of the pressure member.

The main purpose of the tension member 201-202 is to provide pressure tension (pretension) to the presssure member. The tension member is designed to have maximum capacity on tension and substantially no capacity to shear load or bending.

The shear member 301 is designed to provide the necessary shear capacity and shear rigidity at normal loads. Additionally it has the function of keeping the tension member 2nn and the pressure member 1nn in position. At shear force overload the shear member 3nn will fracture or loose its integrity. This will immediately eliminate the bending rigidity and the shear rigidity of the connecting device, as the tension member 2nn and the pressure member 1nn are exposed to shear and probably also bending deformation and will not be kept in place.

The anchoring member 401-403 is only transfers tension forces from the upper mounting plate 21 or the carrying structure 22 to the base in case of an accident (impact). It has a design which allows flexibility in respect of shear deformation between the mounting plates. It will not prevent relative rotation between the mounting plates 16 and 21.

The connecting device is designed to loose its shear force capacity and bending rigidity by the shear force exceeding the shear force capacity of the shear member 3nn, or by exceeding the tension capacity of the tension member 2nn. At a collapse of the shear member, the pressure member and the tension member are moved sideways and their integrity is lost. No forces can now be transferred between the plates therethrough. By exceeding the capacity of the tension member, neither the pressure member nor the tension member will be maintained by the pretension of the tension member, losing the shear rigidity and the bending rigidity. In both cases axial tension force can be transferred between the carrying structure 22 and the base 11 through the anchoring member, but the connecting device has no bending rigidity. The connecting device is designed with a substantial distance between the mounting plates 16 and 21, up to half the width of the upper mounting plate to allow the connecting device to act as a link with no torque.

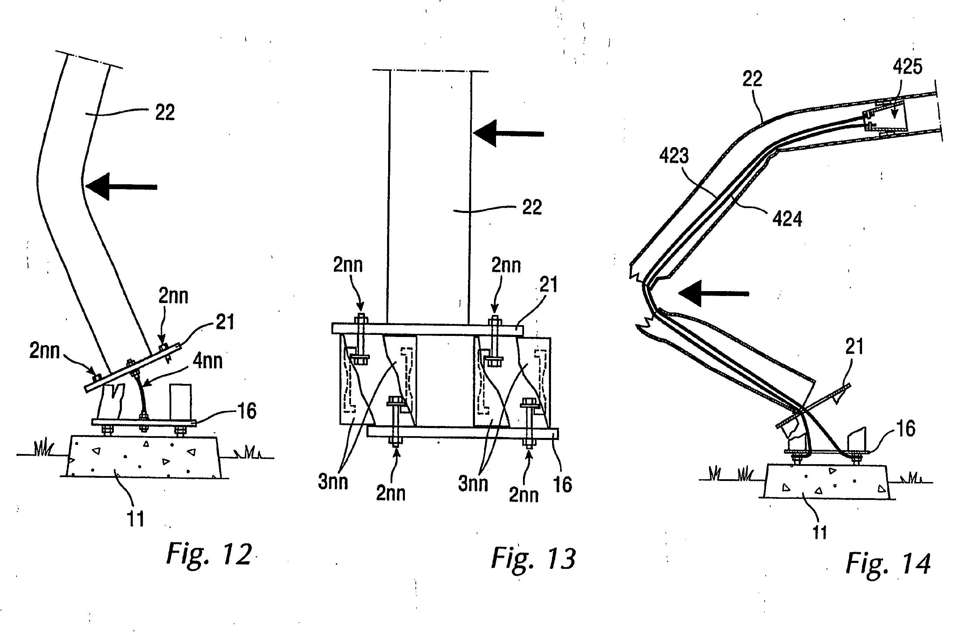

In the assembly of Fig. 4, the pressure member consists of 4x2 pressure elements 104-111 which are stacked in four stacks with two elements in each. The tension member is provided by two bolts 205-206 being pretensioned against the mounting plates 16 and 21 by nuts 207-208 and washers 209-210. The tension member has substantially no shear resistance, as said two bolts are connected by four U-shaped brackets 213-216 and washers 217-220 for adjusting the support. In this example, the sectional area of the U-brackets in the tension direction are reduced at 217-220 to limit the maximum tension force. If the tension force exceeds the capacity of the shear member 302, this will fracture and the tension member will lose its integrity as shown in Fig. 13 by displacing the bolts of the tension member to lose support from the U-shaped brackets.

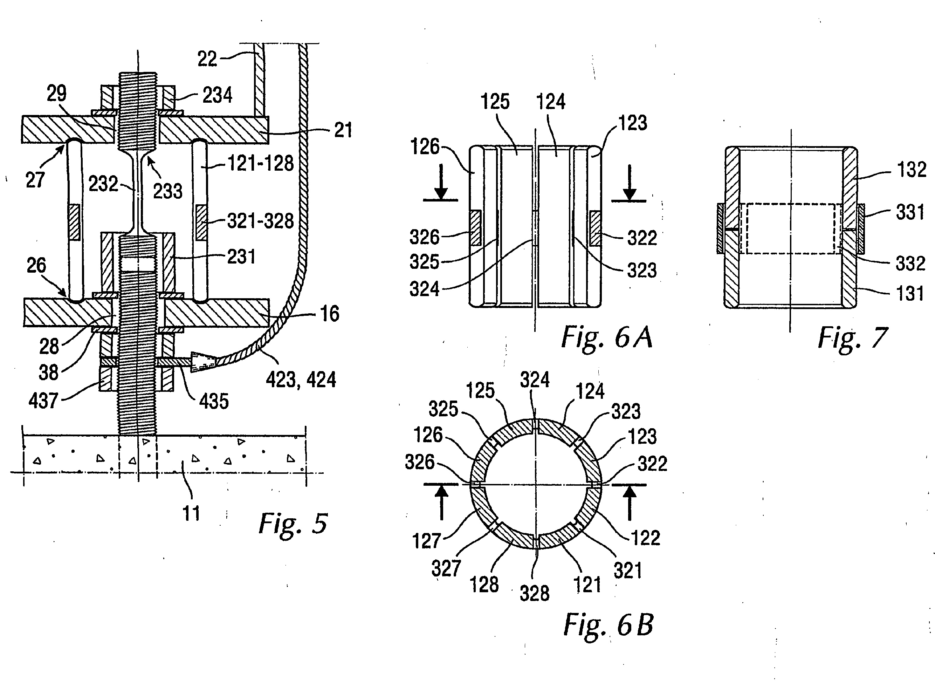

Fig. 5 shows a vertical section through an alternative embodiment of a connecting device according to the invention. In the upper side of the lower mounting plate 16 and in the lower side of the upper mounting plate 21, there is an annular groove 26 and 27 respectively for each bolt 12-15 concentrically around the holes 28 and 29 respectively. The use of washers 38 reduces the tolerance for arranging the bolts 12-15, as the hole 28 may be made spacious. The annular grooves 26 and 27 are supporting and directing the pressure member 1nn and the shear member 3nn, which in this case are provided by one element described in more detail with reference to Fig. 6.

The lower mounting plate 16 on Fig. 5 is connected to the bolts 12-15 with a lower nut 30 and an upper threaded sleeve or connecting nut 231. The nut 30 also acts as an adjusting nut to provide the vertical position of the pole 22. The threaded sleeve 231 is also anchorage for a tension bolt 232 with threaded ends and an intermediate more slender mandrel 233. The tension bolt 232 keeps the upper mounting plate 21 in place by an upper nut 234 which can be tightened with a torque wrench. The purpose of the tension bolt 232 will be apparent from the following.

The tension bolt 232 thus consists of a threaded part with the same diameter as the base bolts 12-13 and a mandrel 233 with reduced area connected with two transition zones with a curvature. In one or both ends there is a groove. The fastening nut 234 is used to establish the pretension. The tension bolt 232 is intended to provide the pretension on the pressure member 121-128. The tension bolt 232 is also provided to limit the torque capacity of the connecting device by limiting the axial force through the tension bolt by selecting appropriate material properties and diameter. By choosing the material and a reduced mandrel diameter 232, the tension force and the remaining shear force capacity should result in th elatter being low. By exceeding the shear force capacity of the assembly, the shear member will lose its integrity, the tension bolt (in addition) will be subject to shear deformation and fracture with subsequent collapse of the assembly.

Under the lower nut 30 of two of the bolts 12-15 an eye 435 is provided, which is connected to one of two wires 423, 424. The eye 435 is locked by an optional locking nut 437. The anchoring device in this case consists of said two attachment wires 423-424, which may be attached to the upper mounting plate 21 by bolts 406-407 as shown in Fig. 2, or in cases with a weak connection between the mounting plate and the pole, or the pole is manufactured from a brittle material, the attachment wires are attached sufficiently high on the pole as shown in Fig. 14, to an attachment device 425. In the latter case, the wires are tightened or even pretensioned, for the purpose of maintaining the carrying structure together.

Fig. 6A and B shows a combined pressure and shear member in the form of a sleeve. The combined pressure and shear member consists in this case of a tubular sleeve with inner evenly distributed axial grooves. In the wall of each groove there is an axial slot in the upper and the lower part. The remaining material in grooves and slots 323 and 328 will provide the shear member, while the axially loaded parts 121-128 provide the pressure member.

The pressure members 1nn and the shear members 3nn can be manufactured of metal, plastic, ceramics or composites. The sectional geometry may be different from square or circular, e.g. oval, polygonal or compound. The shear member can be without grooves or be provided with more grooves to reduce the wall thickness. The grooves are distributed in the zones of the sectional geometry desired to be weakened in respect of shear strength..The grooves may also be evenly distributed as shown.

Fig. 7 shows an alternative design of the pressure member and the shear member adapted to the example of Fig. 5. Each pressure element consists of two tubes 131-132 being stacked along a common axis. The tubes are constrained against sideward movement with the shear member, in this case being an outer shear tie 331 or an inner shear tie 332 as indicated, or a combined outer and inner tie.

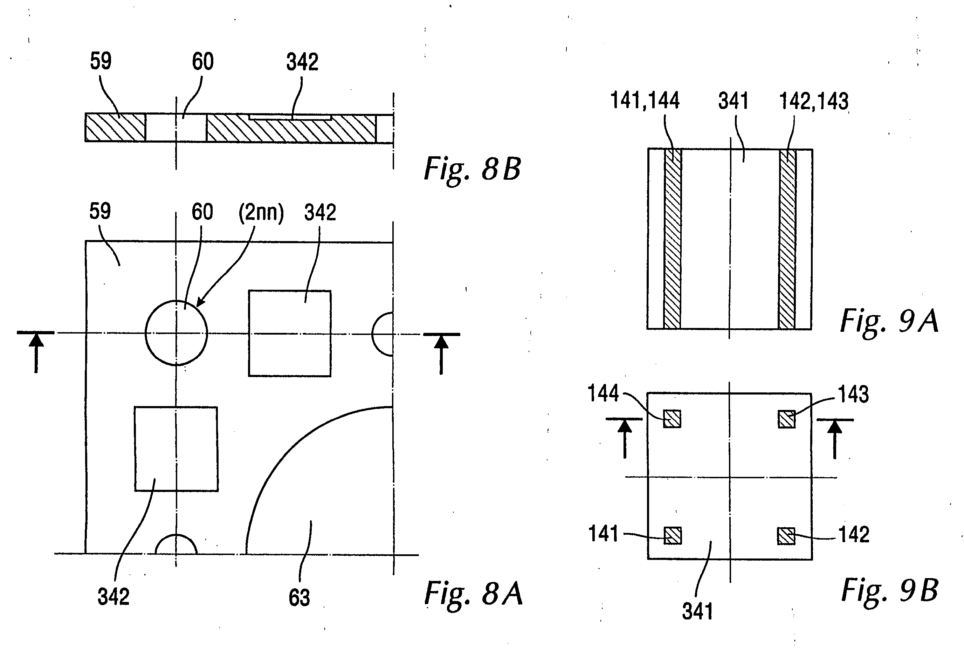

Fig. 8A and 8B show an alternative arrangement of the tension, pressure and shear members on the mounting plates. Fig. 8A is shown a section of a lower, square mounting plate 59 with a hole 60 at each corner for tension members 2nn and the corresponding section through the mounting plate is shown in Fig. 8B. Inside of each hole 60, two rodshaped combined pressure members Inn and shear members 3nn are arranged in the hatched areas of Ffig. 8A (at 342) symmetrically to the diagonal through the hole 60. The ends of the pressure members 1nn and the shear members 3nn are arranged in recesses 342 in the mounting plates 59. The tension members 2nn in this case are arranged eccentrically to the pressure members and shear members.

Fig. 9A and 9B show a vertical and horizontal section respectively, of an alternative design of the pressure members and the shear members according to the invention, which is accommodated together with the mounting plates in Fig. 8. The pressure member and the shear member are, in this case, a unit, but assembled of two materials, vz. four parallel rods 141-144 arranged in a square pattern in a matrix material 341, e.g. plastic, such as foamed polyurethane, a ceramic or similar.

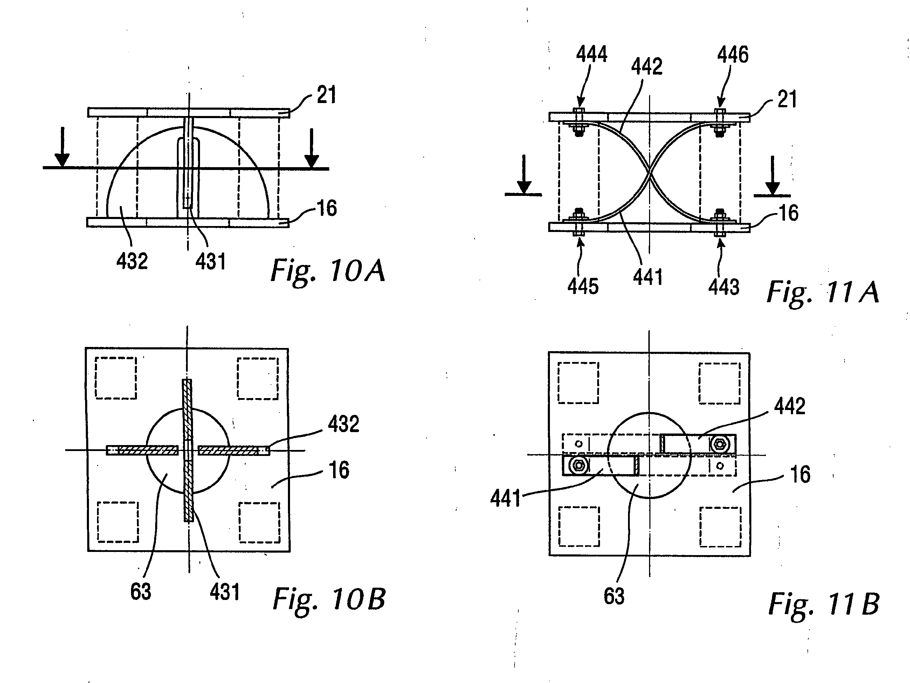

Figs. 10A and 10B show an anchoring device 4nn connecting the lower mounting plate with an upper mounting plate. Possible arrangements of the pressure members 1nn, tension members 2nn and shear members 3nn are indicated by dotted detail in the drawing, but other details are omitted. This anchoring device is generally like that of Fig. 3, shown with a chain with one complete link 402 and two half links 401, 403. In Fig. 10 only two half links 431 and 432 are used, the links being partly filled to provide sufficient strength and optimum shear flexibility.

Figs. 11A and 11B show an anchoring device 4nn connecting the lower mounting plate 16 with the upper mounting plate 21. Possible arrangements of the pressure members 1nn, tension members 2nn and shear members 3nn are indicated by dotted detail in the drawing, but other details are omitted. The anchoring device is in this case provided by two cable elements being attached to attachment points 443-444 for cable 442 and correspondingly for cable 441 with attachment points 445-446 arranged mutually displaced horizontally on the mounting plates and the cables, to make an askew angle to the mounting plates. The mounting points are provided by bolts 443-446 and washers and nuts. The cables 441-442 are somewhat longer than the distance between their attachment points, to provide the necessary shear flexibility. The cables can be manufactured in any material providing low bending resistance and sufficient axial strength.The anchoring devices 4nn shown in the examples in Fig. 2 and in Fig. 12 are special embodiments of the anchoring device shown in Fig. 11. It should be understood that even if some of the examples are shown with two cable elements, a different number cable elements can be used.

In Figs. 5 and 14 anchoring devices are shown, which are not attached to the upper mounting plate 21, but to the pole by an inner attachment element 425, see Fig. 14.

If the anchoring device can not be attached to the pole with sufficient strength by the upper mounting plate, it should be attached sufficiently high on the pole. For poles with high requirements for energy absorption, this may require an attachment in the upper half of the pole. In Figs. 5 and 14, are shown examples of the detail of attachment of the wires 423, 424 to the upper part of the pole 22. The attachment wires 423, 424 are required to keep the carrying structure together after a fracture and having it transfer axial forces and can consist of wires, ropes, cables, chains or similar bendable material. At the upper end, each wire 423, 424 can be attached internal to a conical sleeve arranged in a split ring with circular section or a section otherwise corresponding to the geometrical inner form of the pole. The split ring may be split sufficiently to allow radial flexibility. The conical form will increase the effect. The split ring is attached with screws or similar elements. When the anchoring device 4nn is attached in the pole, the cables are kept as short as possible between the attachment points. If possible, the cables should be pretensioned.

For carrying structures without a requirement for energy absorption, the anchoring device may be omitted.

Fig. 12 illustrates how the connecting device functions when the capacity of the tension member 2nn is exceeded. The connecting device will lose its torque capacity and a link without torque is created. The carrying structure is bent and rotated around the base point, but will maintain its ability to transfer axial forces through the anchoring member 4nn.

Fig. 13 illustrates principle of the function when the horizontal shear force exceeds the capacity of the shear member 3nn. The shear member loses its integrity, shear deformation occurs between the mounting plates 16, 21 and the tension members 2nn are dislocated to cease pretensioning of the pressure members 1nn. If the anchoring device 4nn is present, a link without torque may be created because the mounting plates 16, 21 are arranged with sufficient distance to allow the upper mounting plate to rotate without interfering with the lower mounting plate 16. Without the anchoring device the function of the connecting device will correspond to that of a break away system and will not provide energy absorption.

Fig. 14 illustrates a corresponding case for a pole 22 which is broken down and also released from its mounting plate 21. In this case, it is important and necessary, as described above, that the anchoring wires 423, 424 are attached at the upper, undamaged part of the pole 12 and are as tensioned as possible, to hold the pole together.

### Mode of operation

To have sufficient rigidity at normal load, e.g. wind, the connecting device uses pretensioning of the pressure members 1nn and the tension member 2nn, e.g. by pretensioning the tension members 2nn by tightening the nuts. The rigidity can be increased without increasing the strength. This separates the rigidity properties from the strength properties.

At a vehicle impact on the carrying device, the mode of operation is as follows:
The connecting device creates a link without torque when either the predetermined torque or shear force in the connecting device is exceeded.

The different types of fractures are separated.

Energy absorption will mainly occur through strain on the pole, the connecting device providing rotation and dislocation at the base point as will be required upon an impact, and with the strength and the rigidity predictable. This will depend on the pertinent class (HE, LE, ONE) and pertinent pole.

If the anchoring device is omitted the possibility for large energy absorption in the pole is lost and the behaviour of the link will be of the slip base or break away type.

The operation of the connecting device can be controlled by choosing (or changing) minor details of the structure.

The connecting device may be designed by combining the different elements of the examples with relatively large mutual independence.

### Function at an impact

The invention should amongst others make the carrying structure fulfill the requirements for yielding masts and/or the requirement for energy absorption on shock impact, e.g. as defined in

### EN 12767.

The operating principle is as follows:
The torque capacity is determined by the sectional area and the properties of the tension members 2nn and the number and the placing of the pressure members 1 nn and the tension members 2nn.
The shear force capacity is determined by
   - the remaining area by providing slots and/or grooves in the shear members 3nn
   - the properties of the shear members 3nn
   - the number of shear members and to some extent, for some choices of design, the number of tension elements. The axial tension capacity is determined mainly by the sectional area of the anchoring device and the connecting device, the properties of the materials and the number of anchoring members.

### Modifications

The carrying device of the examples is provided with an anchoring device 4nn to absorb and reduce the kinetic energy of the vehicle. In the case when it is sufficient that the pole is fractured and is released without any disadvantages, the anchoring device may be omitted. On the other hand, the anchoring device of the invention may well be used on carrying structures other than those described in the examples.

The pressure members 1nn and the shear members 3nn may be manufactured from various materials and combinations thereof which comply with the operating requirements described.

The pressure members Inn and the shear members 3nn may be manufactured of any material or composition or structure satisfying the operating requirements described. Other forms of parallel rod assemblies than shown in Figs. 4, 7 or 9, and which can endure a predetermined axial load and which are integrated in a matrix, can be utilized. Pressure members and shear members without an outer connection, can also be used, provided they can be mounted and subjected to axial load.

The upper mounting plate 21 may be attached to the pole 22 with bolts. The pole 22 may be solid, of square tube or an arbitrary profile element.

The mounting plates can be of different dimensions and have holes for an electrical or communication cable to be engaged therethrough.

## Claims

1. Connecting device for masts, poles and similar carrying structures which are mounted on a base (11) at a roadway, particularly at a road or a street, wherein the upper end of the base (11) and the lower end of the pole structure (22) each carries or is integrated with a mounting plate (16,21), which defines an angle with the axis of the pole etc., which mounting plates have holes for at least one connecting member maintaining the two mounting plates (16, 21) together in an operating relationship, the connecting member or members is/are adapted to lose integrity, be deformed, or fracture upon a sideways impact over a certain level, such as at the impact of a motor vehicle, the device comprising
- at least one pressure member (1nn) for providing pressure load between the mounting plates (16,21) and for keeping them a predetermined distance apart, **characterised in that** the device comprises
- at least one shear member (3nn) primarily for taking shear load, and
- at least one tension member (2nn) to provide a tension load between the mounting plates (16,21),
wherein the load on the pressure member (1nn) is provided by the tension member (2nn) and/or the pressure member.

2. Connecting device according to claim 1, wherein the pressure member (1nn) is provided for exerting pressure load and comprises one or more equal or different rod element which may be arranged in a stack or side by side between two or more mounting plates (16.21).

3. Connecting device according to either of claims 1-2, wherein the pressure member (1nn) is without connection to the mounting plates (16, 21) for non-transfer of tension forces.

4. Connecting device according to anyone of claims 1-3, wherein the pressure member or members (1nn) comprise independent rod elements being confined releasably by as matrix or with a ribbon or are based on a rod element in a annular assembly provided with grooves and slots for providing a shear member (3nn).

5. Connecting device according to anyone of claims 2- 4, wherein rod elements are arranged in groups, each group being subject to the load from one or more tension members (2nn).

6. Connecting device according to one of claims 1-5, wherein the tension members (2nn) and the shear members (3nn) are joined or integrated in groups.

7. Connecting device according to claim 6, wherein the tension member (2nn) is provided to impart pretension to the pressure member (1nn) or groups of pressure members, by arranging the tension member (2nn) in openings or at the edge of the mounting plates (16, 21) and is strained between them against the mounting plates (16, 21) and the pressure members (1nn).

8. Connecting device according to claim 6, wherein the pressure members (1nn) are provided for exerting a permanent pretension and tension forces to the tension member (2nn) or the group of tension members, by arranging the pressure members (1nn) in openings or at the edge of the mounting plates (16, 21) and is strained between them against the mounting plates (16, 21) and the tension members (2nn).

9. Connecting device according to either of claims 6 or 7, wherein the tension member (2nn) is provided to lose its integrity or fracture easily by an shear or torque impact.

10. Connecting device according to anyone of claims 6-9, wherein the tension member (2nn) has a predetermined load capacity by considering the material quality of the tensions member and by adjusting the size of the effective sectional area by reducing the load carrying area.

11. Connecting device according to anyone of claims 6-10, wherein the tension member (2nn) is arranged centric or eccentric to the pressure member (1nn) and/or the shear member (3nn) or groups thereof.

12. Connecting device according to anyone of claims 6-11, wherein the shear member (3nn) or groups thereof provides the rigidity of the connecting device relative to sideways displacement of the mounting plates (16, 21).

13. Connecting device according to anyone of claims 6-12, wherein the shear member (3nn) is provided to lose its integrity or fracture easily if it is subject to a shear load over a predetermined level.

14. Connecting device according to either of claims 1-2, wherein the shear member (3nn) is arranged to mate into recesses (63) or grooves (26,27) of the mounting plates (16, 21), or with support against the pressure member (1nn), tension member (2nn) and the mounting plates (16, 21), e.g. by using glue or similar.

15. Connecting device according to one of claims 6-14, wherein a number of pressure members (1nn) or groups thereof, a number of tension members (2nn) and a number of shear members (3nn) or groups thereof, are distributed over the area between the mounting plates (16,21), symmetrically or asymmetrically, centric or non-centric, mutually as well as to the longitudinal axis of the pole (22), to provide a predetermined strength and rigidity in the connecting device.

16. Connecting device according to anyone of claims 1-15, wherein it comprises one or more anchoring members (4nn), e.g. wires, cables, bands, ropes, chains, which are connected to the lower mounting plate (16) or to a base (11) and which maintain a substantially torque free connection between the mounting plates (16, 21) or between the base (11) and the pole (22), to be sideways flexible upon the impact of a motor vehicle and have low flexibility in respect of axial displacement of the pole, said anchoring member or members being tightened and preferably pretensioned in embodiments wherein the member is connected to the pole.

17. Carrying structure for use at roadways, wherein it comprises a base (11), a tubular or trussed pole or a combination thereof, which is connected to a base (11) with a connecting device according to anyone of claims 1-16.

## Patentansprüche

1. Verbindungsvorrichtung für Masten, Pfosten und ähnliche Tragestrukturen, die an einer Basis (11) an einem Fahrweg, insbesondere an einer Fahrbahn oder einer Straße, angebracht sind, wobei das obere Ende der Basis (11) und das untere Ende der Pfostenstruktur (22) jeweils eine Befestigungsplatte (16,21) trägt oder mit dieser integriert ist, welche einen Winkel mit der Achse des Pfostens etc. definiert, welche Befestigungsplatten Löcher für zumindest ein Verbindungselement besitzen, das die zwei Befestigungsplatten (16,21) in einer Funktionsbeziehung zusammenhält, wobei das Verbindungselement oder die -elemente eingerichtet ist/sind, auf einen seitlichen Stoß über einem bestimmten Niveau, beispielsweise beim Auftreffen eines Motorfahrzeugs, die Integrität zu verlieren, verformt zu werden, oder zu brechen, wobei die Vorrichtung umfaßt
- zumindest ein Druckelement (1nn) zum Bereitstellen einer Drucklast zwischen den Befestigungsplatten (16,21) und zum Auseinanderhalten derselben in einem vorbestimmten Abstand, **dadurch gekennzeichnet, daß** die Vorrichtung umfaßt
- zumindest ein Schubelement (3nn) primär zum Aufnehmen einer Scher- bzw. Schubbelastung, und
- zumindest ein Zugelement (2nn) zum Bereitstellen einer Zugbelastung zwischen den Befestigungsplatten (16,21),
wobei die Belastung auf das Druckelement (1nn) durch das Zugelement (2nn) und/oder das Druckelement bewirkt wird.

2. Verbindungsvorrichtung gemäß Anspruch 1, wobei das Druckelement (1nn) zum Ausüben einer Druckbelastung vorgesehen ist und eines oder mehrerer gleiche oder unterschiedliche Stabelement(e) aufweist, das/die in einem Stapel oder Seite an Seite zwischen zwei oder mehreren Befestigungsplatten (16,21) angeordnet sein kann/können.

3. Die Verbindungsvorrichtung gemäß Anspruch 1 oder 2, wobei das Druckelement (1nn) ohne Verbindung mit den Befestigungsplatten (16,21) ist, um keine Zugkräfte zu übertragen.

4. Die Verbindungsvorrichtung gemäß einem der Ansprüche 1 bis 3, wobei das Druckelement oder die -elemente (1nn) unabhängige Stabelemente aufweist/aufweisen, die lösbar durch eine Matrix oder ein Band gebunden sind oder auf einem Stabelement in einer Ringanordnung basiert ist/sind, die mit Nuten und Schlitzen zum Bereitstellen eines Schubelements (3nn) versehen ist.

5. Die Verbindungsvorrichtung gemäß einem der Ansprüche 2 bis 4, wobei Stabelemente in Gruppen angeordnet sind und jede Gruppe der Belastung von einem oder von mehreren Zugelement(en) (2nn) ausgesetzt ist.

6. Die Verbindungsvorrichtung gemäß einem der Ansprüche 1 bis 5, wobei die Zugelemente (2nn) und die Schubelemente (3nn) in Gruppen verbunden oder integriert sind.

7. Die Verbindungsvorrichtung gemäß Anspruch 6, wobei das Zugelement (2nn) vorgesehen ist, um eine Vorspannung auf das Druckelement (1nn) oder die Gruppen von Druckelementen auszuüben, indem das Zugelement (2nn) in Öffnungen oder an dem Rand der Befestigungsplatten (16,21) angeordnet ist und zwischen diesen gegen die Befestigungsplatten (16,21) und die Druckelemente (1nn) verspannt ist.

8. Die Verbindungsvorrichtung gemäß Anspruch 6, wobei die Druckelemente (1nn) zum Ausüben einer permanenten Vorspannung und von Zugkräften auf das Zugelement (2nn) oder die Gruppe von Zugelementen vorgesehen sind, indem die Druckelemente (1nn) in Öffnungen oder an dem Rand der Befestigungsplatten (16,21) angeordnet sind und zwischen diesen gegen die Befestigungsplatten (16,21) und die Zugelemente (2nn) verspannt sind.

9. Die Verbindungsvorrichtung gemäß Anspruch 6 oder 7, wobei das Zugelement (2nn) vorgesehen ist, um durch einen Scher- bzw. Schub- oder Drehstoß seine Integrität zu verlieren oder leicht zu zerbrechen.

10. Die Verbindungsvorrichtung gemäß einem der Ansprüche 6 bis 9, wobei das Zugelement (2nn) eine vorbestimmte Belastungskapazität besitzt, indem die Materialqualität des Zugelements in Betracht gezogen ist und indem die Größe der effektiven Querschnittsfläche durch Verringern der Lastaufnahmefläche eingestellt ist.

11. Die Verbindungsvorrichtung gemäß einem der Ansprüche 6 bis 10, wobei das Zugelement (2nn) zentrisch oder exzentrisch zu dem Druckelement (1nn) und/oder dem Schubelement (3nn) oder den Gruppen derselben angeordnet ist.

12. Die Verbindungsvorrichtung gemäß einem der Ansprüche 6 bis 11, wobei das Schubelement (3nn) oder die Gruppen davon die Steifigkeit der Verbindungsvorrichtung relativ zu einem seitlichen Versatz der Befestigungsplatten (16,21) bereitstellt.

13. Die Verbindungsvorrichtung gemäß einem der Ansprüche 6 bis 12, wobei das Schubelement (3nn) vorgesehen ist, seine Integrität zu verlieren oder leicht zu brechen, wenn es einer Scher- bzw. Schubbelastung über einem bestimmten Niveau ausgesetzt ist.

14. Die Verbindungsvorrichtung gemäß Anspruch 1 oder 2, wobei das Schubelement (3nn) angeordnet ist, um in Ausnehmungen (63) oder Nuten (26,27) der Befestigungsplatten (16,21) zu passen oder gegen das Druckelement (1nn), das Zugelement (2nn) und die Befestigungsplatten (16,21) abgestützt zu sein, zum Beispiel unter Verwendung von Kleber oder Ähnlichem.

15. Die Verbindungsvorrichtung gemäß einem der Ansprüche 6 bis 14, wobei eine Anzahl von Druckelementen (1nn) oder Gruppen davon, eine Anzahl von Zugelementen (2nn) und eine Anzahl von Schubelementen (3nn) oder Gruppen davon über der Fläche zwischen den Befestigungsplatten (16,21) symmetrisch oder asymmetrisch, zentrisch oder nichtzentrisch, gegenseitig sowie bezüglich der Längsachse des Pfostens (22) verteilt sind, um eine vorbestimmte Festigkeit und Steifigkeit in der Verbindungsvorrichtung bereitzustellen.

16. Die Verbindungsvorrichtung gemäß einem der Ansprüche 1 bis 15, wobei sie eine oder mehrere Ankerelemente (4nn), z.B. Drähte, Kabel, Bänder, Seile, Ketten, aufweist, welche mit der unteren Befestigungsplatte (16) oder einer Basis (11) verbunden sind und die eine im wesentlichen drehmomentfreie Verbindung zwischen den Befestigungsplatten (16,21) oder zwischen der Basis (11) und dem Pfosten (22) halten, um bei dem Stoß eines Motorfahrzeugs seitwärts flexibel zu sein und eine geringe Flexibilität bezüglich einem axialen Versatz des Pfostens zu haben, wobei das Ankerelement oder die Ankerelemente in Ausführungsformen, bei denen das Element mit dem Pfosten verbunden ist, festgezogen und vorzugsweise vorgespannt ist/sind.

17. Eine Tragestruktur zur Verwendung an Fahrwegen, wobei diese eine Basis (11), einen rohrförmigen oder armierten Pfosten oder eine Kombination davon, welcher/welche mit einer Basis (11) mit einer Verbindungsvorrichtung gemäß einem der Ansprüche 1 bis 16 verbunden ist, aufweist.

## Revendications

1. Dispositif connecteur pour des mâts, des poteaux et des structures porteuses similaires, montés sur une base (11) sur une chaussée, en particulier sur une route ou une rue, dans lequel l'extrémité supérieure de la base (11) et l'extrémité inférieure de la structure de poteau (22) portent chacune ou sont intégrées à une plaque de montage (16, 21) définissant un angle avec l'axe du poteau, etc., lesdites plaques de montage comprenant des trous pour au moins un organe de connexion maintenant ensemble les deux plaques de montage (16, 21) en une relation fonctionnelle, le ou les organes de connexion est/sont adaptés pour perdre leur intégrité, être déformés ou se fracturer lors d'un impact survenant de côté, supérieur à un certain niveau, tel que lors de l'impact d'un véhicule automobile, le dispositif comprenant :
- au moins un organe de compression (1nn), pour fournir une charge de pression entre les plaques de montage (16, 21) et pour les maintenir espacées d'une distance prédéterminée, **caractérisé en ce que** le dispositif comprend :
- au moins un organe de cisaillement (3nn), principalement pour supporter une charge de cisaillement, et
- au moins un organe d'extension (2nn), pour fournir une charge d'extension entre les plaques de montage (16, 21),
dans lequel la charge appliquée sur l'organe de compression (1nn) est fournie par l'organe d'extension (2nn) et/ou l'organe de compression.

2. Dispositif connecteur selon la revendication 1, dans lequel l'organe de compression (1nn) est prévu pour exercer une charge de compression et comprend un ou plusieurs éléments formant tige, identiques ou différents, pouvant être agencés en un empilement ou côté à côté, entre deux plaque de montage (16, 21) ou plus.

3. Dispositif connecteur selon l'une des revendications 1 ou 2, dans lequel l'organe de compression (1nn) est dénué de connexion aux plaques de montage (16, 21), pour ne pas transférer de forces d'extension.

4. Dispositif connecteur selon l'une quelconque des revendications 1 à 3, dans lequel le ou les organes de compression (1nn) comprend (comprennent) des éléments formant tige indépendants, confinés de façon désolidarisable par une matrice ou avec un ruban, ou basés sur un élément formant tige en un ensemble annulaire muni de gorges et d'encoches, pour fournir un organe de cisaillement (3nn).

5. Dispositif connecteur selon l'une quelconque des revendications 2 à 4, dans lequel des éléments formant tige sont agencés en groupes, chaque groupe étant soumis à la charge provenant d'un ou plusieurs d'organes d'extension (2nn).

6. Dispositif connecteur selon l'une des revendications 1 à 5, dans lequel les organes d'extension (2nn) et les organes de cisaillement (3nn) sont joints ou intégrés en groupes.

7. Dispositif connecteur selon la revendication 6,
dans lequel l'organe d'extension (2nn) est prévu pour communiquer une extension préalable à l'organe de compression (1nn) ou à des groupes d'organes de compression, par agencement de l'organe d'extension (2nn) dans des ouvertures ou au bord des plaques de montage (16, 21) et est tendu entre eux, contre les plaques de montage (16, 21) et les organes de compression (1nn).

8. Dispositif connecteur selon la revendication 6,
dans lequel les organes de compression (1nn) sont prévus pour exercer une préextension permanente et des forces d'extension sur l'organe d'extension (2nn), ou le groupe d'organes d'extension, par agencement des organes de compression (1nn) dans des ouvertures ou au bord des plaques de montage (16, 21) et est tendu entre eux, contre les plaques de montage (16, 21) et les organes d'extension (2nn).

9. Dispositif connecteur selon l'une des revendications 6 ou 7, dans lequel l'organe d'extension (2nn) est prévu pour perdre son intégrité ou se fracturer aisément, sous l'effet d'un impact provoquant un cisaillement ou un couple.

10. Dispositif connecteur selon l'une quelconque des revendications 6 à 9, dans lequel l'organe d'extension (2nn) présente une capacité de charge prédéterminée, par le biais de la qualité du matériau de l'organe d'extension et par ajustement de la taille de l'aire efficace de la section, par le biais d'une réduction de l'aire porteuse d'une charge.

11. Dispositif connecteur selon l'une quelconque des revendications 6 à 10, dans lequel l'organe d'extension (2nn) est agencé de manière centrée ou excentrée par rapport à l'organe de compression (1nn) et/ou l'organe de cisaillement (3nn) ou des groupes de ceux-ci.

12. Dispositif connecteur selon l'une quelconque des revendications 6 à 11, dans lequel l'organe de cisaillement (3nn) ou des groupes de ceux-ci fournit la rigidité du dispositif de connexion par rapport à un déplacement oblique des plaques de montage (16, 21).

13. Dispositif connecteur selon l'une quelconque des revendications 6 à 12, dans lequel l'organe de cisaillement (3nn) est prévu pour perdre son intégrité ou se fracturer aisément, s'il est soumis à une charge de cisaillement supérieure à un niveau prédéterminé.

14. Dispositif connecteur selon l'une des revendications 1 ou 2, dans lequel l'organe de cisaillement (3nn) est agencé pour s'accoupler dans des cavités (63) ou des gorges (26, 27) des plaques de montage (16, 21), ou avec effet de support contre l'organe de compression (1nn), l'organe d'extension (2nn) et les plaques de montage (16, 21), par exemple en utilisant une colle ou similaire.

15. Dispositif connecteur selon l'une des revendications 6 à 14, dans lequel une pluralité d'organe de compression (1nn) ou des groupes de ceux-ci, une pluralité d'organe d'extension (2nn) et une pluralité d'organes de cisaillement (3nn) ou des groupes de ceux-ci, sont répartis sur l'aire existant entre les plaques de montage (16, 21), symétriquement ou asymétriquement, de manière centrée ou non centrée, mutuellement ainsi que dans l'axe longitudinal du poteau (22), pour fournir une résistance et une rigidité prédéterminées dans le dispositif connecteur.

16. Dispositif connecteur selon l'une quelconque des revendications 1 à 15, dans lequel il comprend un ou plusieurs organes d'ancrage (4nn), par exemple des fils, des câbles, des rubans, des cordes, des chaînes, connectés à la plaque de montage inférieure (16) ou à une base (11) et maintenant une connexion pratiquement exempte de couple entre les plaques de montage (16, 21) ou entre la base (11) et le poteau (22), pour être obliquement flexible lors de l'impact d'un véhicule automobile et présenter une faible flexibilité par rapport à un déplacement axial du poteau, ledit organe d'ancrage ou lesdits organes d'ancrage étant serré(s) et, de préférence, préétiré(s), dans des modes de réalisation dans lesquels l'organe est connecté au poteau.

17. Structure porteuse, pour utilisation sur des chaussées, dans laquelle elle comprend une base (11), un poteau tubulaire ou armé, ou une combinaison de ceux-ci, connecté à une base (11) à l'aide d'un dispositif connecteur selon l'une quelconque des revendications 1 à 16.
